(19) Europäisches Patentamt
European Patent Office
Office européen des brevets

(11) **EP 1 276 627 B1**

## (12) EUROPÄISCHE PATENTSCHRIFT

(45) Veröffentlichungstag und Bekanntmachung des Hinweises auf die Patenterteilung:
**16.07.2008  Patentblatt 2008/29**

(21) Anmeldenummer: **01929307.5**

(22) Anmeldetag: **31.03.2001**

(51) Int Cl.:
***B60K 31/00*** *(2006.01)*

(86) Internationale Anmeldenummer:
**PCT/DE2001/001280**

(87) Internationale Veröffentlichungsnummer:
**WO 2001/079014 (25.10.2001 Gazette 2001/43)**

(54) **VERFAHREN ZUR REGELUNG DER GESCHWINDIGKEIT EINES FAHRZEUGS**

METHOD FOR REGULATING THE SPEED OF A VEHICLE

PROCEDE DE REGULATION DE LA VITESSE D'UN VEHICULE

(84) Benannte Vertragsstaaten:
**DE FR IT**

(30) Priorität: **14.04.2000  DE 10018557**

(43) Veröffentlichungstag der Anmeldung:
**22.01.2003  Patentblatt 2003/04**

(73) Patentinhaber: **ROBERT BOSCH GMBH
70442 Stuttgart (DE)**

(72) Erfinder:
• **WINNER, Hermann
  76467 Bietigheim (DE)**
• **LUEDER, Jens
  70806 Kornwestheim (DE)**

(56) Entgegenhaltungen:
**EP-A- 0 798 150         WO-A-99/28144
DE-A- 19 736 964      DE-A- 19 919 888**

EP 1 276 627 B1

**Beschreibung**

Stand der Technik

Die Erfindung betrifft ein Verfahren zur Regelung der Geschwindigkeit eines Fahrzeuges, insbesondere in Abhängigkeit von einem vorausfahrenden Fahrzeug in der gleichen Fahrspur, nach dem Oberbegriff des Hauptanspruchs.

Es ist beispielsweise aus der DE 197 22 947 C1 bekannt, dass eine Erfassung des vorausfahrenden Fahrzeugs auch unter Berücksichtigung des Straßenverlaufs, z.B. in Kurven, grundsätzlich über die mit einem Sensor, z.B. ein Radarsensor, ermittelten Signale bewerkstelligt werden kann.

Es ist darüber hinaus aus der DE 42 42 700 A1 bekannt, dass ein Radarsensor zur Erfassung der vorausfahrenden Fahrzeuge an einem Fahrzeug angebracht ist. Dieser Radarsensor ist z.B. ein Baustein eines Fahrzeugkomfortsystems ACC (Adaptiv Cruise Control), bei dem ständig Informationen über den Abstand und die Relativgeschwindigkeit des Fahrzeuges zu anderen Fahrzeugen und zu den Straßengegebenheiten verarbeitet werden.

Beispielsweise wird in einer aus der DE 195 30 065 A1 bekannten Weise ein FMCW-Radar (Frequency Modulated Continuous Wave) außen im vorderen Bereich des Kraftfahrzeuges angebracht, das sowohl die Sendetechnik mit einem Antennensystem zur Erzeugung der Radarstrahlen als auch einen Empfänger mit Auswerteelektronik aufweist. Durch ein mehrstrahliges Verfahren kann gemäß der DE 195 30 065 A1 auch eine laterale Positionsbestimmung der Objekte, beispielsweise bei Fahrzeugen in einer Kurve, durchgeführt werden.

Die eingangs erwähnte Geschwindigkeitsregelung in einem ACC-System erfolgt in der Art, dass die Fahrgeschwindigkeit an langsamere vorausfahrende Fahrzeuge angepasst wird, wenn diese von dem Radar-Abstandssensor mit begrenztem Erfassungsbereich gemessen werden und sich im voraussichtlichen Kursbereich befinden. Für das Systemverhalten stellt hierbei die Kurvenfahrt eine besonders kritische Situation dar, da einerseits die vorgegebene Sollgeschwindigkeit für die Kurvenfahrt zu hoch sein kann und andererseits der durch den Radarsensor erfasste Bereich in der Kurve eingeschränkt ist und somit vorausfahrende Fahrzeuge erst später detektiert werden können, was zu kritischen Annäherungen führen kann.

Es ist darüber hinaus auch an sich bekannt, beispielsweise aus dem Fachaufsatz "Abstandsregelung mit Radar", F. Ackermann, Spektrum der Wissenschaft, Ausgabe 6/80, Seite 24 bis 34, die Spur- oder Kursprädiktion mit Hilfe von für andere Zwecke schon vorgesehenen, fahrzeugeigenen Sensoren vorzunehmen. Beispielsweise kann die mit einem entsprechenden Sensor erfasste Gierrate, d.h. die Winkelgeschwindigkeit des Fahrzeugs um die Hochachse, oder die auf das ACC-Fahrzeug wirkende Querbeschleunigung ausgewertet werden, um die Geschwindigkeit zu begrenzen. Damit wird eine Kurve jedoch erst erkannt, wenn sich das Fahrzeug selbst in derselben befindet, so dass dies zu spät ist um eine sinnvolle Kursprädiktion durchzuführen. Insbesondere muss hierbei zusätzlich auch verhindert werden, dass am Kurveneingang eine Regelung auf Fahrzeuge auf Nachbarspuren erfolgt.

Die EP 0 798 150 A2 offenbart ein Verfahren gemäß dem Oberbegriff des Anspruchs 1. Insbesondere zeigt diese Schrift einen Tempomaten mit Fahrzeugfolgemodus, bei dem mittels eines Objektsensors ein vorherfahrendes Fahrzeug erkannt wird und von einem Geschwindigkeitsregelmodus auf einen Folgeregelmodus umgeschaltet wird. Wird mittels eines Lenkwinkelsensors eine Kurvenfahrt erkannt oder bewegt sich das vorherfahrende Fahrzeug aus dem Sensorerfassungsbereich heraus, so wird die Wiederaufnahmebeschleunigung begrenzt.

Die DE 199 19 888 A1 zeigt eine Vorrichtung und ein Verfahren zur Steuerung der Fahrzeuggeschwindigkeit eines Kraftfahrzeuges bei dem die Geschwindigkeit und der Abstand zu einem vorherfahrenden Fahrzeug erkannt wird, eine auf die Karosserie des Fahrzeugs einwirkende Seitenbeschleunigung , welche bei Durchfahren einer kurvigen Strasse erzeugt wird, erkannt wird, ein Zielwert der Fahrzeuggeschwindigkeit für das Fahrzeug berechnet wird, bei dem der Zwischenfahrzeugabstand gleich einem Ziel-Zwischenfahrzeugabstand wird und in Abhängigkeit der Seitenbeschleunigung die Ziel-Fahrzeuggeschwindigkeit so korrigiert wird, dass der erkannte Wert gleich der korrigierten Ziel-Fahrzeuggeschwindigkeit wird.

Die WO 99/28144 zeigt eine Steuerung für Fahrzeuge, bei der die Geschwindigkeit und der Abstand des vorherfahrenden Fahrzeugs vor Einfahrt in eine Kurve gespeichert werden und das eigenen Fahrzeug damit während der Kurvendurchfahrt auf eine niedrigere Geschwindigkeit geregelt werden kann, als das vorherfahrende Fahrzeug.

Vorteile der Erfindung

Ein Verfahren zur Regelung der Geschwindigkeit eines Fahrzeuges, bei dem mit einem Radarsensor mindestens ein vorausfahrendes Fahrzeug in der gleichen Fahrspur innerhalb eines Radarerfassungsbereichs detektiert und bei dem im zu regelnden Fahrzeug die Querbeschleunigung erfasst wird, ist erfindungsgemäß in vorteilhafter Weise mit den Merkmalen des Anspruchs 1 definiert.

Mit der Erfindung wird in vorteilhafter Weise ein zuverlässiger Betrieb des eingangs erwähnten ACC-Systems in Kurven gewährleistet. Dies ist durch die Kombination der erwähnten verschiedenen Ansätze möglich, die ein unkomfortables oder ungewolltes Beschleunigen vor bzw. in Kurven verhindern.

So kann erfindungsgemäß die Beschleunigung oder Beschleunigungsänderung in einer Kurve bei Vorliegen einer noch nicht zur Beschleunigungsbegrenzung führenden Querbeschleunigung im ACC-Fahrzeug in Abhängigkeit von dem eingeschränkten Radarsichtbereich begrenzt werden. Der Radarsichtbereich resultiert aus den geometrischen Beziehungen zwischen dem Fahrbahnverlauf und dem Radarerfassungsbereich des Radarsensors am ACC-Fahrzeug. Ein Kriterium für die Bestimmung der Beschleunigungsbegrenzung ist die Zeitdauer ($\tau_{Range}$) bis das ACC-Fahrzeug die seitliche Grenze ($\alpha_{Range}$) des Radarerfassungsbereichs erreicht hat. Ab hier können weiter entfernte Objekte, die sich auf der eigenen Fahrspur befinden, aufgrund des Straßenverlaufs nicht mehr durch den Radarsensor erfasst werden, was zu nicht komfortablen Annäherungen an vorausfahrende Fahrzeuge führen kann.

Es ist außerdem besonders vorteilhaft, wenn die Beschleunigungsbegrenzung um so stärker ist, je kürzer der in Zeiteinheiten gemessenen Radarerfassungsbereich ist.

Beim Betrieb des ACC-Systems kann weiterhin das Problem auftreten, dass bei oder vor Einfahrt des ACC-Fahrzeugs in eine Kurve der Verlust des bereits in der Kurve befindlichen vorausfahrenden Fahrzeugs als Zielobjekt durch ein Verlassen des Radarerfassungsbereichs auftritt, während das ACC-Fahrzeug noch nicht den eigentlichen Kurvenbereich erreicht hat. Eine Erfassung dieser Art von Zeilobjektverlusten unter Ausschluss von Ausschervorgängen ist somit möglich, falls bis zum Zeitpunkt des Zielobjektverlustes dieses sich im Kurs des ACC-Fahrzeuges befindet und nicht einer Nachbarspur zugeordnet wird.

Auch hier kann nach der Erkennung dieser Art von Zielobjektverlusten entweder die Beschleunigung oder die Beschleunigungsänderung des ACC-Fahrzeugs begrenzt werden. Die Reaktionszeit liegt hierbei in der Größenordnung der bei einem Zielobjektverlust vorliegenden Ist-Zeitlücke und kann proportional zu dieser gewählt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung verwirklicht sein können und vorteilhafte sowie für sich schutzfähige Ausführungen darstellen können.

Zeichnung

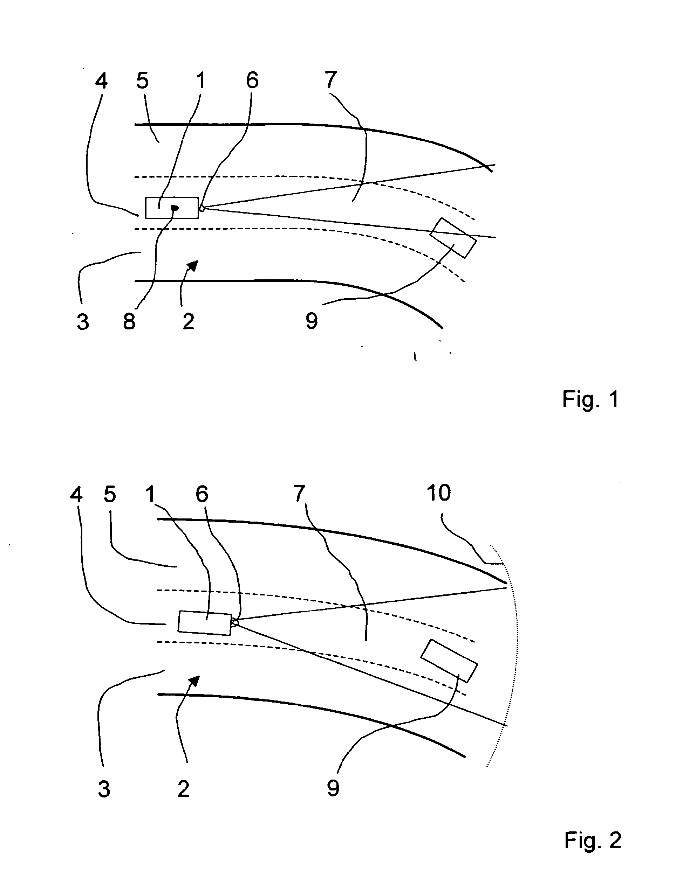

Das erfindungsgemäße Verfahren zur Regelung der Geschwindigkeit eines Fahrzeuges in Abhängigkeit von einem vorausfahrenden sich in einer Kurve, in der gleichen Fahrspur befindlichen Fahrzeug, wird anhand der Skizzen in den Figuren 1 und 2 der Zeichnung erläutert.

Beschreibung des Ausführungsbeispiels

In Figur 1 ist ein zu regelndes ACC-Fahrzeug 1 gezeigt, das sich auf einer Fahrbahn 2 mit Fahrspuren 3, 4 und 5 befindet. Das Fahrzeug 1 weist einen Radarsensor 6 mit einem Radarerfassungsbereich 7 und einen Beschleunigungssensor 8 auf und befindet sich in einem Abstand vor einer Kurve. Auf der Fahrbahn 2 befindet sich auf der gleichen Spur 4 noch ein vorausfahrendes Fahrzeug 9, das bereits in die Kurve hineingefahren ist und den Radarerfassungsbereich 7 gerade verlässt.

Mit dem Signal des Beschleunigungssensor 8 oder einer aus dem Lenkradwinkel, der Differenz der Raddrehzahlen oder der Gierrate bestimmten Querbeschleunigung kann bei einer ausreichenden Querbeschleunigung die Beschleunigung oder die Beschleunigungsänderung des ACC-Fahrzeugs 1 in einer hier nicht näher erläuterten, aber an sich bekannten Schaltungsanordnung begrenzt werden. Bei der Darstellung nach der Figur 1 ist das Fahrzeug 1 aber noch nicht in die Kurve eingefahren, so dass hier eine zu einer Begrenzung führende Querbeschleunigung noch nicht vorliegt. Um aber trotzdem ein unkomfortables Beschleunigen nach einem Zielobjektverlust des vorausfahrenden Fahrzeugs 9 zu verhindern, wird dieser Zielobjektverlust zusätzlich zur Querbeschleunigung selbst ausgewertet und so ein entsprechendes Signal zur Begrenzung der Beschleunigung oder der Beschleunigungsänderung des ACC-Fahrzeugs 1 generiert.

Aus Figur 2 ist zu entnehmen, dass das Fahrzeug 1 sich im Unterschied zu der Darstellung nach der Figur 1 bereits in der Kurve befindet. Hier wird bei einer eventuell noch nicht zur Beschleunigungsbegrenzung führenden Querbeschleunigung im ACC-Fahrzeug 1 die Begrenzung in Abhängigkeit von dem eingeschränkten Radarsichtbereich 10 in der Weite $d_{Range}$ bewirkt. Der Radarsichtbereich 10 resultiert aus den geometrischen Beziehungen zwischen dem Verlauf der Fahrbahn 2 und dem Radarerfassungsbereich 7 des Radarsensors 6 am ACC-Fahrzeug 1. Ein Kriterium für die Bestimmung der Beschleunigungsbegrenzung ist dabei die Zeitdauer $\tau_{Range}$ bis das ACC-Fahrzeug 1 die seitliche Grenze $\alpha_{Range}$ des Radarerfassungsbereichs 7 erreicht hat.

Es gilt hier folgende Beziehung:

$$\tau_{Range} = d_{Range} / V1 = 2*\alpha_{Range} / (k * V1)$$

wobei k die Kurvenkrümmung (k=1/R) und VI die Geschwindigkeit des Fahrzeugs 1 darstellt.

**Patentansprüche**

1.  Verfahren zur Regelung der Geschwindigkeit eines Fahrzeuges (1), bei dem

    - mit einem Radarsensor (6) mindestens ein in einer Kurve vorausfahrendes Fahrzeug (9) welches sich in der gleichen Fahrspur (3) wie das zu regelnde Fahrzeug (1) befindet, innerhalb eines Radarerfassungsbereichs (7) detektiert wird und bei dem
    - im zu regelnden Fahrzeug (1) die Querbeschleunigung erfasst wird,
    - im zu regelnden Fahrzeug (1) eine Beschleunigungsbegrenzung vorgenommen wird, wenn zusätzlich zu oder anstelle einer Querbeschleunigung ein Erreichen der Grenze des Radarerfassungsbereichs (7) des zu regelnden Fahrzeugs (1) und/oder ein Verlassen des vorausfahrenden Fahrzeugs (9) des Radarerfassungsbereichs (7) unter Ausschluss eines Fahrspurwechsels ausgewertet wird, **dadurch gekennzeichnet,**
    - **dass** die Beschleunigungsbegrenzung in Abhängigkeit der Zeitdauer $\tau_{Range}$ bestimmt wird, wobei $\tau_{Range}$ die Zeitdauer ist, bis das zu regelnde Fahrzeug (1) die seitliche Grenze $\alpha_{Range}$ des Radarerfassungsbereichs (7) erreicht hat und $\tau_{Range}$ gemäß der Beziehung

$$\tau_{Range} = 2 * \alpha_{Range} / (k * V1)$$

    berechnet wird, wobei $\alpha_{Range}$ die seitliche Begrenzung des Radarerfassungsbereichs (7) ist, k die Kurvenkrümmung ist und V1 die Geschwindigkeit des zu regelnden Fahrzeugs (1) ist.

2.  Verfahren nach Anspruch 1, **dadurch gekennzeichnet, dass**

    - die Größe der Beschleunigungsbegrenzung abhängig ist von einer Einschränkung des Radarsichtbereichs (10), der aus einer geometrischen Beziehung zwischen dem Fahrbahnverlauf und dem Radarerfassungsbereich (7) resultiert.

**Claims**

1.  Method for controlling the speed of a vehicle (1), in which method

    - a radar sensor (6) is used to detect at least one vehicle (9), which is travelling ahead around a bend and which is in the same lane (3) as the vehicle (1) to be controlled, within a radar coverage area (7), and in which method
    - the lateral acceleration is registered in the vehicle (1) to be controlled,
    - acceleration limitation is performed in the vehicle (1) to be controlled when, in addition to or instead of lateral acceleration, it is judged that the limit of the radar coverage area (7) of the vehicle (1) to be controlled has been reached and/or the vehicle (9) travelling ahead has departed from the radar coverage area (7) without changing lane, **characterized**
    - **in that** the acceleration limitation is determined as a function of the time period $\tau_{Range}$, where $\tau_{Range}$ is the time period until the vehicle (1) to be controlled has reached the lateral limit $\alpha_{Range}$ of the radar coverage area (7) and $\tau_{Range}$ is calculated in accordance with the equation

$$\tau_{Range} = 2 * \alpha_{Range} / (k*V1)$$

where $\alpha_{Range}$ is the lateral limitation of the radar coverage area (7), k is the curvature of the bend and V1 is the speed of the vehicle (1) to be controlled.

2. Method according to Claim 1, **characterized in that**

   - the magnitude of the acceleration limitation is dependent on a restriction of the radar viewing range (10) which results from a geometric relationship between the carriageway profile and the radar coverage area (7).

**Revendications**

1. Procédé de régulation de la vitesse d'un véhicule (1) selon lequel :

   - avec un capteur radar (6) on détecte au moins un véhicule (9) qui précède dans une courbe, et qui se trouve dans la même voie de circulation (3) que le véhicule (1) à réguler, dans une plage de saisie radar (7) ; et
   - dans le véhicule à réguler (1), on saisit l'accélération transversale ;
   - dans le véhicule (1) à réguler, on effectue une limitation de l'accélération en exploitant en plus ou à la place d'une accélération transversale, le fait d'atteindre la limite de la plage de saisie radar (7) du véhicule (1) à réguler et/ ou le fait que le véhicule (9) qui précède quitte la plage de saisie radar (7) à l'exclusion d'un changement de voie de circulation ;

   **caractérisé en ce qu'**
   on détermine la limite d'accélération en fonction de la durée $\tau_{Range}$, cette durée $\tau_{Range}$ étant la durée qu'il faut au véhicule (1) à réguler pour atteindre la limite latérale $\alpha_{Range}$ de la plage de saisie radar (7) et la durée $\tau_{Range}$ se calcule selon l'équation suivante :

$$\tau_{Range} = 2 * \alpha_{Range} / (k * V1)$$

   équation dans laquelle
   $\alpha_{Range}$ représente la limite latérale de la plage de saisie radar (7),
   k est la courbure de la courbe ; et
   V1 est la vitesse du véhicule (1) à réguler.

2. Procédé selon la revendication 1,
   **caractérisé en ce que**
   la grandeur de la limite d'accélération dépend de la limite de la plage de saisie radar (10) qui résulte d'une relation géométrique entre la trajectoire du véhicule et la plage de saisie radar (7).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722947 C1
- DE 4242700 A1
- DE 19530065 A1
- EP 0798150 A2
- DE 19919888 A1
- WO 9928144 A